# EUROPEAN PATENT SPECIFICATION

(11) **EP 3 113 035 B1**
(45) Date of publication and mention of the grant of the patent: **26.02.2020**
(21) Application number: 14883798.2
(22) Date of filing: 01.07.2014
(51) Int. Cl.: G06F 16/48, G06Q 10/10

(54) **METHOD AND APPARATUS FOR GROUPING CONTACTS**
VERFAHREN UND VORRICHTUNG ZUM GRUPPIEREN VON KONTAKTEN
PROCÉDÉ ET APPAREIL POUR GROUPER DES CONTACTS

(30) Priority: 26.02.2014 CN 201410067348
(43) Date of publication of application: 04.01.2017
(73) Proprietor: Huawei Technologies Co., Ltd., Longgang District Shenzhen, Guangdong 518129 (CN)
(72) Inventor: ZHANG, Yong, Shenzhen Guangdong 518129 (CN)
(74) Representative: Maiwald Patent- und Rechtsanwaltsgesellschaft mbH
(86) International application number: PCT/CN2014/081323
(87) International publication number: WO 2015/127739

(56) References cited:
- CN-A- 102 811 177
- CN-A- 102 867 038
- CN-A- 103 530 540
- CN-A- 103 870 547
- US-A1- 2008 256 107
- US-A1- 2012 109 996
- US-A1- 2013 282 833
- VENAYAGAMOORTHY G K ET AL: "Voice recognition using neural networks", COMMUNICATIONS AND SIGNAL PROCESSING, 1998. COMSIG '98. PROCEEDINGS OF THE 1998 SOUTH AFRICAN SYMPOSIUM ON RONDEBOSCH, SOUTH AFRICA 7-8 SEPT. 1998, NEW YORK, NY, USA,IEEE, US, 7 September 1998 (1998-09-07), pages 29-32, XP010317164, DOI: 10.1109/COMSIG.1998.736916 ISBN: 978-0-7803-5054-0

## Description

### TECHNICAL FIELD

The present invention relates to the communications field, and in particular, to a contact grouping method and apparatus.

### BACKGROUND

Currently, various communications tools or communications applications are playing an increasingly important role in people's daily life and work. However, an address book is a basic function of various communications tools or communications applications. As the number of contacts increases, effective management of the contacts for a user becomes an important requirement. For example, by performing a sharing operation on an application based on contact grouping, a target audience for receiving information can be located accurately. Therefore, how to quickly group contacts in an address book becomes an urgent problem to be solved.

US2012/0109996A1 describes a method, system and apparatus for managing contact data. The method comprises storing a plurality of contact attributes distilled from at least one data source in a memory, the contact attributes defining a plurality of contacts; receiving input data at a communications interface; identifying at least one search attribute from the received input data; selecting at least one of the plurality of contacts based on matches between the plurality of contact attributes and the at least one search attribute; and transmitting notification data based on the selected contact.

US2013/0282833A1 relates to generating a group of invitees in a wireless communication system. An embodiment of the disclosure receives criteria for an event from an organizer of the event, compares the criteria to contact information of each contact of a plurality of contacts, assigns a recommendation ranking to each contact based on the comparison of the criteria to the contact information for each contact, and displays a subset of the plurality of contacts sorted according to the recommendation ranking.

In the prior art, contacts are mostly grouped manually, or only automatic grouping and sorting according to surnames or name initials are supported, and the manual operation is complex and time-consuming. In addition, searching or adding to favorites according only to a single attribute is supported, and searching is also time-consuming.

### SUMMARY

In view of this, a technical problem to be solved in the present invention is how technically implement to group contacts in an address book of various communications tools or communications applications automatically and accurately.

The invention is set out in the appended claims.

According to detailed description of exemplary embodiments with reference to accompanying drawings, other characteristics and aspects of the present invention become clearer.

### BRIEF DESCRIPTION OF DRAWINGS

Together with the specification, accompanying drawings that are included in the specification and are a part of the specification show exemplary embodiments, characteristics, and aspects of the present invention, and are used to interpret principles of the present invention.
FIG. 1 shows a flowchart of a contact grouping method according to an embodiment of the present invention;
FIG. 2 shows a flowchart of a contact grouping method according to another embodiment of the present invention;
FIG. 3 shows a schematic structural diagram of a contact grouping apparatus according to an embodiment of the present invention;
FIG. 4 shows a schematic structural diagram of a contact grouping apparatus according to another embodiment of the present invention;
FIG. 5 shows a schematic structural diagram of a contact grouping apparatus according to still another embodiment of the present invention; and
FIG. 6 shows a schematic structural diagram of a user terminal.

### DESCRIPTION OF EMBODIMENTS

The following describes various exemplary embodiments, characteristics, and aspects of the present invention in detail with reference to accompanying drawings. A same reference numeral in the accompanying drawings denotes components that have the same or similar functions. Unless otherwise specified, the accompanying drawings are not necessarily drawn to scale although various aspects of the embodiments are shown in the accompanying drawings.

The dedicated term "exemplary" here means "serving as an example or embodiment, or being illustrative". Any embodiment described in an "exemplary" manner here is not necessarily construed as being superior to or better than other embodiments.

In addition, to better describe the present invention, many details are given in the following specific implementation manners. A person skilled in the art should understand that the present invention can also be implemented without some of the details. In some embodiments, methods, means, components, and circuits that are well-known to a person skilled in the art are not described in detail, so that a substance of the present invention is highlighted.

The contact grouping method provided in the embodiments of the present invention may be applied to group contacts in an address book of various communications tools or communications applications automatically and accurately, so as to search for a contact quickly and share or collect information in a targeted manner. In a possible implementation manner, the embodiments of the present invention may be implemented by a user terminal such as a mobile phone or a tablet, or by a computing device such as a personal computer. The embodiments of the present invention describe in detail a solution of the present invention by using address book grouping of a mobile terminal as a typical application scenario.

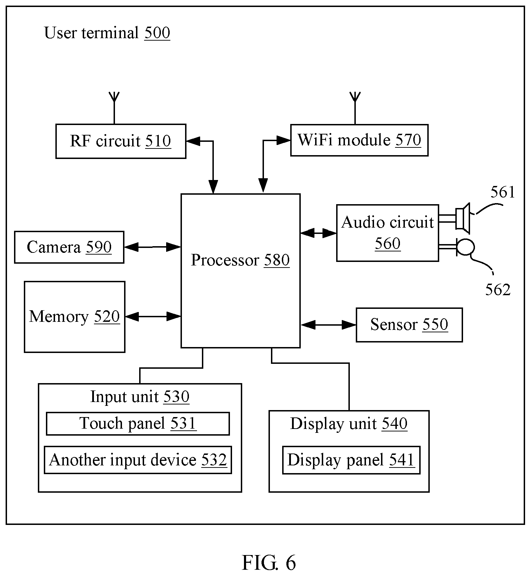

First, FIG. 6 shows a schematic structural diagram of a user terminal. As shown in FIG. 6, a terminal 500 includes a radio frequency (RF) circuit 510, a memory 520, an input unit 530, a wireless fidelity (Wi-Fi) module 570, a display unit 540, a sensor 550, an audio circuit 560, a processor 580, a camera 590, and other components.

A person skilled in the art may understand that a structure of the terminal 500 shown in FIG. 6 does not constitute any limitation on the terminal 500, and the terminal 500 may include more or less components than is the components shown in the figure, or may combine some components, or have different component arrangements.

The RF circuit 510 may be configured to: receive and send a signal in a process of receiving and sending information or during calling, and particularly, receive downlink information of a base station and then send the downlink information to the processor 580 for processing; and send uplink data to the base station. Generally, an RF circuit includes but is not limited to an antenna, at least one amplifier, a transceiver, a coupler, a low noise amplifier (LNA), a duplexer, and the like. In addition, the RF circuit 510 may also communicate with a network or another device by means of radio communications. The foregoing radio communications may use any communications standard or protocol, which includes but is not limited to Global System of Mobile communications (GSM), General Packet Radio Service (GPRS), Code Division Multiple Access (CDMA), Wideband Code Division Multiple Access (WCDMA), Long Term Evolution (LTE), email, and a short message service (SMS).

The memory 520 may be configured to store a software program and a module, and the processor 580 executes various function applications and data processing of the terminal 500 by running the software program and the module stored in the memory 520. The memory 520 may mainly include a program storage area and a data storage area, where the program storage area may store an operating system, an application (such as a sound playing function and an image playing function) needed by at least one function, and the like. The data storage area may store data (such as audio data and a phone book) created according to usage of the terminal 500, and the like. In addition, the memory 520 may include a high-speed random access memory, and may further include a non-volatile memory such as a disk storage device, a flash memory device, or another volatile solid-state memory device.

The input unit 530 may be configured to receive input number or character information, and generate key signal input related to user setting and function control of the terminal 500. Specifically, the input unit 530 may include a touch panel 531 and another input device 532. The touch panel 531 is also called a touchscreen, which may collect a touch operation of a user on or near the touch panel 531 (for example, an operation of a user on the touch panel 531 or near the touch panel 531 by using any suitable object or accessory such as a finger or a stylus), and drive a corresponding connection apparatus according to a preset program. Optionally, the touch panel 531 may include two parts: a touch detection apparatus and a touch controller. The touch detection apparatus detects a touch direction of the user, detects a signal brought by a touch operation, and transmits the signal to the touch controller; and the touch controller receives touch information from the touch detection apparatus, converts the touch information into touch point coordinates, sends the touch point coordinates to the processor 580, and can receive a command sent from the processor 580 and execute the command. In addition, the touch panel 531 may be implemented in multiple types such as a resistive type, a capacitive type, an infrared type, and a surface acoustic wave type. The input unit 530 may further include another input device 532 in addition to the touch panel 531. Specifically, the another input device 532 may include but is not limited to one or more of: a physical keyboard, a function key (such as a volume control key, a switch key), a trackball, a mouse, and a joystick.

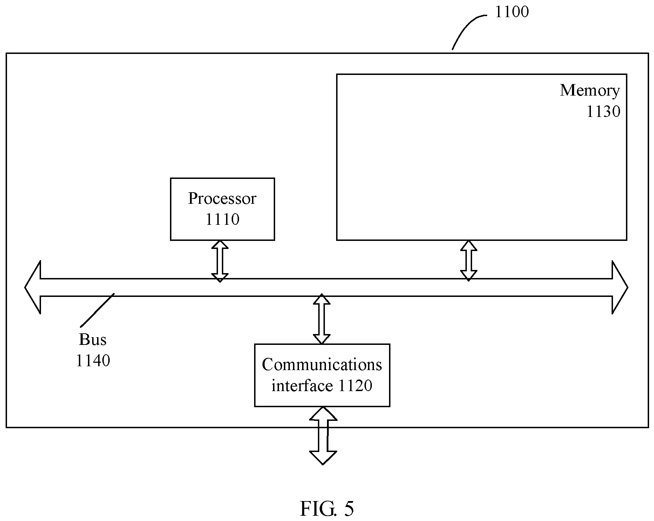

The display unit 540 may be configured to display information input by the user, or information provided to the user, and various menus of the terminal. The display unit 540 may include a display panel 541. Optionally, the display panel 541 may be configured in a form such as a liquid crystal display (Liquid Crystal Display, LCD), or an organic light-emitting diode (Organic Light-Emitting Diode, OLED). Further, the touch panel 531 may cover the display panel 541. After detecting a touch operation on or near the touch panel 531, the touch panel 531 transfers the touch operation to the processor 580 to determine a type of a touch event, and then the processor 580 provides a corresponding visual output on the display panel 541 according to the type of the touch event. Although in FIG. 5, the touch panel 531 and the display panel 541 serve as two independent components to implement input and output functions of the terminal, in some embodiments, the touch panel 531 and the display panel 541 may be integrated to implement the input and output functions of the terminal 500.

The terminal 500 may further include at least one sensor 550, such as a light sensor, a motion sensor, and other sensors. Specifically, the light sensor may include an ambient light sensor and a proximity sensor, where the ambient light sensor may adjust luminance of the display panel 541 according to brightness of ambient light rays, and the proximity sensor may turn off the display panel 541 and/or backlight when the terminal 500 approaches an ear. As a type of motion sensor, an accelerometer sensor can detect an acceleration value in each direction (generally three axes), and can detect a value and a direction of gravity when being stationary; and may apply to an application for recognizing a terminal posture (such as switching between a landscape orientation and a portrait orientation, related games, and magnetometer posture calibration), a vibration recognition related function (such as a pedometer and knock), and the like. For other sensors that may be configured on the terminal, such as a gyroscope, a barometer, a hygrometer, a thermometer, and the infrared sensor, details are not described herein again.

The audio circuit 560, a loudspeaker 561, and a microphone 562 may provide an audio interface between the user and the terminal. The audio circuit 560 may transmit, to the loudspeaker 561, an electric signal that is received and converted from audio data, and the loudspeaker 561 converts the electric signal into a sound signal for output; in another aspect, the microphone 562 converts a collected sound signal into an electric signal, and the audio circuit 560 receives the electric signal and converts the electric signal into audio data, and then outputs the audio data to the processor 580 for processing, so as to send the audio data after processing to, for example, another terminal through an RF circuit 510, or output the audio data to the memory 520 for further processing.

Wi-Fi belongs to a short-distance radio transmission technology. By using a Wi-Fi module 570, the terminal can help the user receive and send an email, browse a webpage, visit a streaming media, and the like. Wi-Fi provides the user with wireless broadband access to the Internet. Although FIG. 6 shows the Wi-Fi module 570, it may be understood that the Wi-Fi module 570 is not a mandatory component of the terminal 500, and may be omitted according to a requirement without changing the essence of the present invention. The processor 580 is a control center of the terminal, and is connected to each part of the entire terminal by using various interfaces and lines, and performs various functions of the terminal 500 and processes data by running or executing the software program and/or module stored in the memory 520 and invoking data stored in the memory 520, so as to perform overall monitoring on the terminal 500. Optionally, the processor 580 may include one or more processing units; and preferably, an application processor and a modem processor may be integrated in the processor 580, where the application processor mainly processes an operating system, a user interface, an application, and the like, and the modem processor mainly processes radio communications.

It may be understood that, the modem processor may not be integrated in the processor 580.

The terminal 500 further includes a power supply (such as a battery) that supplies power to each component.

Preferably, the power supply may be logically connected to the processor 580 by using a power supply management system, so as to implement functions such as charging management, discharging management, and power consumption management by using the power supply management system. A Bluetooth module and the like, which is not shown though, may further be included in the terminal 500, and details are not described herein again.

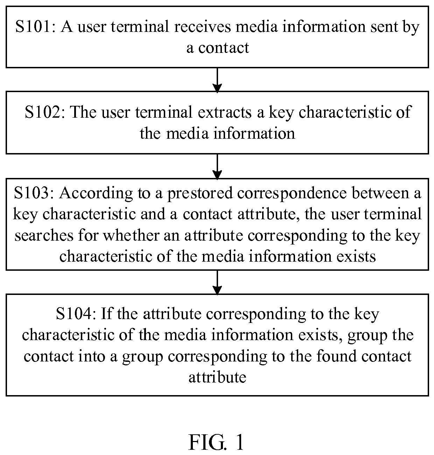

Based on the description of the foregoing application scenario, the following describes a contact grouping method according to the present invention. As shown in FIG. 1, the method includes:
Step S101: A user terminal receives media information sent by a contact.

In some embodiments of the present invention, a terminal 500 uses an input unit 530 to receive the media information sent by the contact. Certainly, the media information is not limited to being received by using an input unit, but may also be received by using an audio circuit 560 (if an authentication request is in an audio form), or even be received by using an RF circuit 510 or a Wi-Fi module 570, which is not specially limited by the present invention.

Step S102: The user terminal extracts a key characteristic of the media information.

In a possible implementation manner, when the media information includes voice information sent in a communication process, the voice information is converted into a voice signal by means of Fourier transformation (FT), and a frequency of the voice signal is extracted as the key characteristic, or a keyword in the voice signal is extracted as the key characteristic, where the keyword may be a word that appears frequently. When the media information includes text information sent in a communication process, a keyword in the text information is extracted as the key characteristic, where the keyword may be a word that appears in a high appearance frequency. When the media information includes image information in a communication process, one or more of: a color characteristic, a texture characteristic, a shape characteristic, and a space relationship characteristic of the image information sent by the contact is or are extracted as the key characteristic.

Step S103: According to a prestored correspondence between a key characteristic and a contact attribute, the user terminal searches for whether a contact attribute corresponding to the key characteristic of the media information exists.

In a possible implementation manner, according to the frequency of the voice signal, and based on the prestored correspondence between a key characteristic and a contact attribute, it is searched for whether an attribute, such as a gender, an age range, or an accent, of a contact corresponding to the frequency of the voice signal exists, where the contact attribute includes at least one of: a gender, an age range, and an accent. According to a keyword in the voice information, and based on the prestored correspondence between a key characteristic and a contact attribute, it is searched for whether an attribute, such as a temperament or a habit, of a contact corresponding to the keyword in the voice information exists, where the contact attribute includes at least one of: a hobby and a habit. According to the keyword in the text information such as the word that appears in a high frequency, and based on the prestored correspondence between a key characteristic and a contact attribute, it is searched for whether an attribute, such as a hobby or a habit, of a contact corresponding to the keyword in the text information exists, where the contact attribute includes at least one of: a hobby and a habit. According to the key characteristic of the image information, and based on the prestored correspondence between a key characteristic and a contact attribute, it is searched for whether an attribute, such as a hobby or a habit, of a contact corresponding to the key characteristic of the image information exists, where the contact attribute includes at least one of: a hobby and a habit. In the embodiment of the present invention, an example in which the contact attribute is a gender, an age range, an accent, a hobby, or a habit of the contact is used. A person skilled in the art should understand that the contact grouping method described in the embodiment of the present invention may be implemented by prestoring a correspondence between a key characteristic and another contact attribute except the contact attribute enumerated above.

Step S104: If the contact attribute corresponding to the key characteristic of the media information exists, group the contact into a group corresponding to the attribute according to the found contact attribute.

In a possible implementation manner, the contact is grouped into the corresponding group according to the contact attribute such as a gender, an age, an accent, a temperament, a hobby, or a habit. For example, a gender group is male or female; an age group is juvenile, the middle-aged, the elderly, or the like; an accent group is Mandarin, Cantonese, Hokkien, or the like; a temperature group is being lively, silent, or the like; a hobby group is travel, book reading, or the like; and a habit group is getting up early, staying up late, or the like. In this way, contacts can be grouped into different groups according to different attributes, and one contact may belong to different different groups.

In this way, a correspondence between a key characteristic and a contact attribute is prestored, based on the correspondence, the contact attribute is determined according to a key characteristic of media information received in a communication process, and further, a contact is grouped into a corresponding group according to the contact attribute. According to the contact grouping method in the embodiment of the present invention, contacts in an address book of various communications tools or communications applications can be grouped automatically and accurately, and when a user uses the communications tools or the applications to batch-send or share information, contacts in a target group can be precisely selected according to the group, thereby avoiding incorrect information delivery, information flooding, and a traffic waste on non-target contacts.

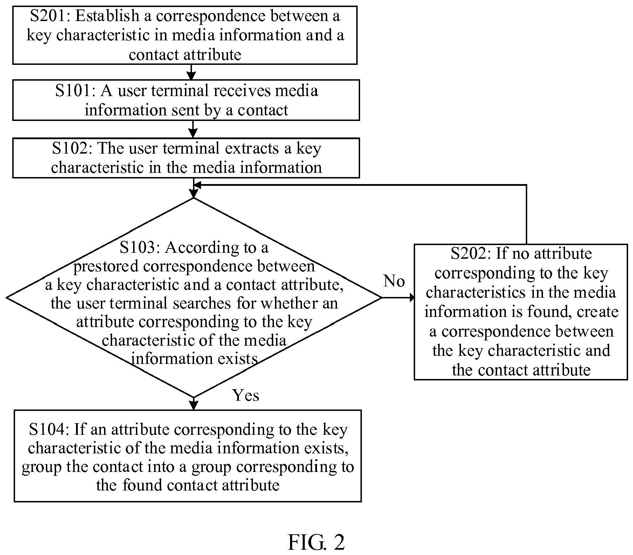

FIG. 2 shows a flowchart of a contact grouping method according to another embodiment of the present invention. For brevity, a detailed description of components in FIG. 2, which have same reference numbers and same functions as those in FIG. 1, is omitted. As shown in FIG. 2, in a possible implementation manner, the method further includes:
Step S201: Establish a correspondence between a key characteristic of media information and a contact attribute.

In a possible implementation manner, plenty of samples are trained to extract the key characteristic, construct a classifier, and separately establish mode libraries with different characteristics, including a gender mode library used to store a correspondence between a frequency of a voice signal and a gender, an age mode library used to store a correspondence between a frequency of a voice signal and an age, an accent mode library used to store a correspondence between an audio and an accent, a hobby mode library used to store a correspondence between a keyword, and a temperament and a hobby, a habit mode library used to store a correspondence between a keyword and a habit, and the like.

For example, a gender mode library is established. According to a voice frequency, for example, if the voice frequency is in a high-frequency range, such as an interval from 200 Hertz to 1100 Hertz, it is considered that the voice is from a female; if the voice frequency is in a low-frequency interval such as an interval from 80 Hertz to 523 Hertz, it is considered that the voice is from a male; and if the voice frequency of the contact falls within an overlapping interval of a male and a female, the gender of the contact may be determined according to user selection. For another example, an age mode library is established, and is divided into juvenile, the middle-aged, and the elderly according to different voice frequency ranges. For another example, a corpus of eight major dialects is collected, including North dialect, Wu dialect, Hunan dialect, Jiangxi dialect, Hakka dialect, northern Fujian dialect, southern Fujian dialect, and Cantonese dialect, and an accent mode library is established by training plenty of samples. The accent mode library includes plenty of recording results generated when a pronouncer separately dictates tens of thousands of sentences in a quiet environment, where the sentences include various topics such as idioms, SMS messages, advertisements, stories, poems, weather, news, lectures, essays, invitations, speeches, letters, and notifications.

Establishment of the correspondence between a key characteristic of media information and a contact attribute may also be implemented by using a clustering algorithm, which specifically includes that: similarity analysis is performed for samples according to key characteristics of existing samples, and the key characteristics are grouped into multiple preset clusters. The clustering algorithm used in this embodiment may include a density-based algorithm DBSCAN and a splitting-based algorithm K-means, and the like. Using the DBSCAN algorithm as an example, a sample set D that includes sample points p1, p2...., pn is input, and a radius E is preset. Using the frequency of the voice signal as an example, it may be preset that the sample radius E is 50 Hertz, and an area, which is apart from a sample point p1 by a distance of E, is called an E neighborhood of the sample point p1; a minimum number MinPts (for example, 5) is preset, and when the number of sample points in the E neighborhood of the sample point p1 is greater than or equal to MinPts, the sample point p1 is a core object of the cluster. If the sample point p2 is in the E neighborhood of p1, the sample point p2 is directly density-reachable from the core object p1. Further, if all sample points in the sample set D meets that pi is directly density-reachable from pi-1, the object pn is density-reachable from the object p1. All sample points are processed circularly, and an unprocessed point is extracted from the samples. If the extracted point is the core object, all objects that are density-reachable from the core object are found to form a cluster, where the cluster corresponds to a specific attribute of the contact. If the extracted point is an edge point (non-core object), this cycle is skipped, and a next point is found until all points are processed. All clusters that meet a density requirement can be generated according to the DBSCAN algorithm. Different clusters correspond to different attributes of the contact. In a possible implementation manner, according to the embodiment of the present invention, the correspondence between the key characteristic of the media information and the contact attribute may be established by using the clustering algorithm.

In a possible implementation manner, a correspondence between the keyword and the contact attribute is established by constructing a classifier, where the keyword may be a word that appears in a high frequency, which specifically includes: preparing plenty of samples, where each sample has a key characteristic and a corresponding attribute, and then training samples by means of a statistical method, machine learning, or a neural network method. For example, an idiom is linked to a contact habit to establish a correspondence between the idiom and the habit, and a topic represented by the keyword is linked to a contact hobby to establish a correspondence between the topic and the contact hobby.

In a possible implementation manner, plenty of samples are trained, and the characteristic of the image information are analyzed to obtain specific attribute types such as a tourism type, a gastronomy type, and the like, where the characteristic of the image information includes a color characteristic, a texture characteristic, a shape characteristic, a space relationship characteristic, and the like. In addition, a correspondence between the key characteristic and the contact attribute is established according to these attribute types. In the embodiment of the present invention, an example in which step S201 is performed before step S101 is used. However, in an actual application, it is appropriate so long as this step is performed before step S103.
Step S101: Receive media information sent by a contact.
Step S102: Extract a key characteristic of the media information.

In a possible implementation manner, when the media information includes voice information sent in a communication process, a frequency of the voice signal is extracted as the key characteristic, which specifically includes: first, performing sampling and quantization on the voice signal by using a specific frequency, and performing pre-emphasis by means of high-pass filtering, and then taking a sound frame to avoid sharp change of the characteristic; removing noise by means of low-pass filtering, and then converting preprocessed voice information into a voice signal by means of FT, and extracting the frequency of the voice signal as the key characteristic. In another possible implementation manner, fast Fourier Transformation (FFT) is performed on an input signal, and the key characteristic is extracted from the input signal, or a prediction coefficient, such as a linear prediction coefficient or a linear prediction cepstrum coefficient, which is used to calculate the key characteristic, is extracted, and then the key characteristic is predicted for another discrete point.

When the media information includes text information sent in a communication process, a keyword in the text information, for example, a word that appears in a high frequency, is extracted as the key characteristic, which specifically includes: formatting an original text into a same format to facilitate subsequent uniform processing, breakdown, and statistics; breaking down the text according to phrases, for example, recognizing several continuous words in a passage as one phrase; and then performing phrase frequency statistics according to the phrase that is broke down. When the media information includes image information in a communication process, one or more of: a color characteristic, a texture characteristic, a shape characteristic, and a space relationship characteristic of the image information sent by the contact is or are extracted as the key characteristic, which specifically includes: deblocking an image or complementing edges to meet an algorithm requirement, and then using an image characteristic extracting algorithm such as FT, a least square method, and a histogram method to extract a key characteristic of the image, which is described below by using the histogram method as an example: scanning all pixels of the image circularly; taking one pixel and obtaining a grayscale value of the pixel, and performing accumulative counting according to the grayscale value until all pixels are scanned; forming a histogram by using a grayscale value range (0-255) as a bottom length and using the number of appearance times of each grayscale as a height, and obtaining the color characteristic of the image by analyzing the histogram.

Step S103: According to a prestored correspondence between a key characteristic and a contact attribute, search for whether a contact attribute corresponding to the key characteristic of the media information exists.

In a possible implementation manner, according to the frequency of the voice signal, and based on the prestored correspondence between a key characteristic and a contact attribute, such as a gender mode library, an age mode library, and an accent mode library, it is searched whether a contact attribute such as a gender, an age range, or an accent of the contact corresponding to the key characteristic of the media information exists.

According to the keyword in the text information, and based on the prestored correspondence between a key characteristic and a contact attribute, it is searched whether the contact attribute corresponding to the key characteristic of the media information exists, such as a hobby or a habit of the contact.

According to the key characteristic of the image information, such as one or more of the color characteristic, the texture characteristic, the shape characteristic, and the space relationship characteristic, it is searched whether the contact attribute corresponding to the key characteristic of the media information exists. For example, according to the mode library, the image is matched to a specific attribute type. For example, different attributes such as a tourism type and a gastronomy type correspond to the attribute such as a hobby or a habit of the contact.

Step S104: If the contact attribute corresponding to the key characteristic of the media information exists, group, according to the found contact attribute, the contact into a group corresponding to the attribute. In a possible implementation manner, the following step is further included:
Step S202: If no contact attribute corresponding to the key characteristic of the media information is found, create a correspondence between the key characteristic of the media information and the contact attribute.

The new correspondence is created, and then steps S103 to S104 are performed again.

When the contact attribute cannot be determined according to the prestored correspondence between the key characteristic and the contact attribute, the new correspondence between the key characteristic and the contact attribute is established. For example, when an area of the contact cannot be determined according to a prestored accent mode library, a correspondence between an accent of the contact and the area of the contact is established according to user selection, and the newly established correspondence is added into the prestored correspondence between the key characteristic and the contact attribute to facilitate subsequent grouping.

The contact is grouped into a corresponding group according to the attribute such as a gender, age, hobby, or habit of the contact. The user may implement accurate information delivery according to the group. For example, when the user wants to invite friends into an activity, the user may perform screening according to a classified contact characteristic, for example, may select contacts of a same age range and a same hobby to join the activity.

In this way, a correspondence between a key characteristic and a contact attribute is prestored, based on the correspondence, the contact attribute is determined according to a key characteristic of media information in a communication process, and further, a contact is grouped into a corresponding group according to the contact attribute. According to the contact grouping method in the embodiment of the present invention, contacts in an address book of various communications tools or communications applications can be grouped automatically and accurately, and when a user uses the communications tools or the applications to batch-send or share information, contacts in a target group can be precisely selected according to the group, thereby avoiding incorrect information delivery, information flooding, and a traffic waste on non-target contacts.

When the contact attribute cannot be determined according to the prestored correspondence between the key characteristic and the contact, a new correspondence between the key characteristic and the contact attribute is established, and the newly established correspondence is grouped into the prestored correspondence between the key characteristic and the contact attribute. According to the contact grouping method in the embodiment of the present invention, when the key characteristic cannot match an existing correspondence, the correspondence between the key characteristic and the contact attribute can be created according to user selection to facilitate subsequent grouping.

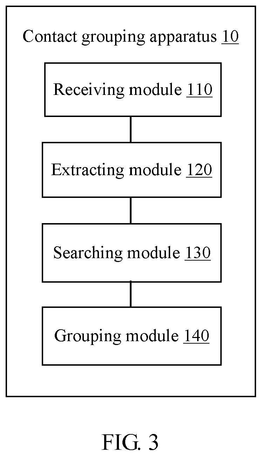

FIG. 3 shows a schematic structural diagram of a contact grouping apparatus according to an embodiment of the present invention. As shown in FIG. 3, the apparatus 10 includes: a receiving module 110, an extracting module 120, a searching module 130, and a grouping module 140.

The receiving module 110 is configured to receive media information sent by a contact. A specific step is the same as the foregoing step S101, and details are not described herein again.

The extracting module 120 is connected to the receiving module 110 and configured to extract a key characteristic of the media information. A specific step is in the same as the foregoing step S102, and details are not described herein again.

The searching module 130 is connected to the extracting module 120 and configured to search, according to a prestored correspondence between a key characteristic and a contact attribute, for whether a contact attribute corresponding to the key characteristic of the media information exists. A specific step is in the same as the foregoing step S103, and details are not described herein again.

The grouping module 140 is connected to the searching module 130 and configured to group, when the searching module 130 finds that the contact attribute corresponding to the key characteristic of the media information exists, the contact into a group corresponding to the attribute according to the found contact attribute. A specific step is in the same as the foregoing step S104, and details are not described herein again.

In a possible implementation manner, the media information received by the receiving module 110 includes voice information, the contact attribute includes at least one of: a hobby and a habit, and the extracting module 120 is specifically configured to extract a keyword in the voice information as the key characteristic of the media information.

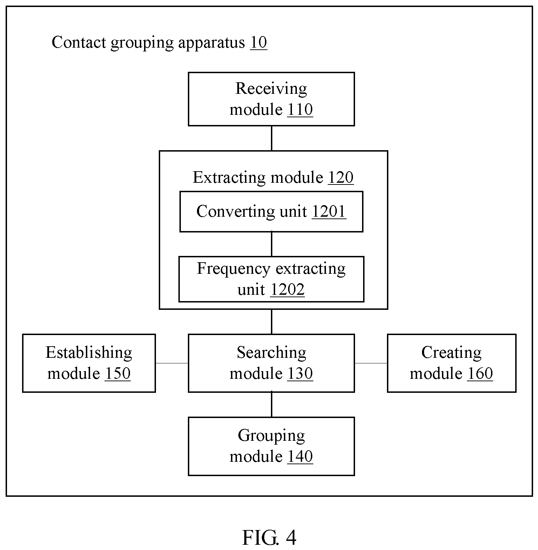

In another possible implementation manner, as shown in FIG. 4, the media information received by the receiving module 110 includes voice information, the contact attribute includes at least one of: a gender, an age range, and an accent, and the extracting module 120 includes: a converting unit 1201, configured to convert the voice information into a voice signal; and a frequency extracting unit 1202, configured to extract a frequency of the voice signal as the key characteristic of the media information.

In a possible implementation manner, the media information received by the receiving module 110 includes text information, the contact attribute includes at least one of: a hobby and a habit, and the extracting module 120 is specifically configured to extract a keyword in the text information as the key characteristic of the media information.

In a possible implementation manner, the media information received by the receiving module 110 includes image information, the contact attribute includes at least one of: a hobby and a habit, and the extracting module 120 is specifically configured to extract one or more of: a color characteristic, a texture characteristic, a shape characteristic, and a space relationship characteristic of the image information as the key characteristic of the media information.

In this way, a correspondence between a key characteristic and a contact attribute is prestored, based on the correspondence, the contact attribute is determined according to a key characteristic of media information in a communication process, and further, a contact is grouped into a corresponding group according to the contact attribute. According to the contact grouping apparatus in the embodiment of the present invention, contacts in an address book of various communications tools or communications applications can be grouped automatically and accurately, and when a user uses the communications tools or the applications to batch-send or share information, contacts in a target group can be precisely selected according to the group, thereby avoiding incorrect information delivery, information flooding, and a traffic waste on non-target contacts.

FIG. 4 is a schematic structural diagram of a contact grouping apparatus according to another embodiment of the present invention. Components with same reference numbers in FIG. 4 as those in FIG. 3 have same functions, and for a brevity purpose, detailed description of these components is omitted. As shown in FIG. 4, in a possible implementation manner, the apparatus 10 further includes an establishing module 150.

The establishing module 150 is connected to the searching module 130 and configured to: establish, before the searching module 130 searches for whether a contact attribute corresponding to the key characteristic of the media information exists, a correspondence between a key characteristic and a contact attribute. A specific process is similar to step S201, and details are not described herein again.

In a possible implementation manner, the apparatus 10 further includes a creating module 160.

The creating module 160 is connected to the searching module 130 and configured to create, when the searching module finds no contact attribute corresponding to the key characteristic of the media information, a correspondence between the key characteristic of the media information and the contact attribute. A specific process is similar to the foregoing step S202, and details are not described herein again.

In this way, a correspondence between a key characteristic and a contact attribute is prestored, based on the correspondence, the contact attribute is determined according to a key characteristic of media information in a communication process, and further, a contact is grouped into a corresponding group according to the contact attribute. According to the contact grouping apparatus in the embodiment of the present invention, contacts in an address book of various communications tools or communications applications can be grouped automatically and accurately, and when a user uses the communications tools or the applications to batch-send or share information, contacts in a target group can be precisely selected according to the group, thereby avoiding incorrect information delivery, information flooding, and a traffic waste on non-target contacts.

When the contact attribute cannot be determined according to the prestored correspondence between the key characteristic and the contact, a new correspondence between the key characteristic and the contact attribute is established, and the newly established correspondence is grouped into the prestored correspondence between the key characteristic and the contact attribute. According to the contact grouping apparatus in the embodiment of the present invention, when the key characteristic cannot match an existing correspondence, the correspondence between the key characteristic and the contact attribute can be created according to user selection to facilitate subsequent grouping.

FIG. 5 shows a schematic structural diagram of a contact grouping apparatus according to another embodiment of the present invention. The contact grouping apparatus 1100 may be a host server or a personal computer PC that has a computing capability, a portable computer or terminal, or the like. A specific embodiment of the present invention does not set any limitation on specific implementation of a computing node.

The contact grouping apparatus 1100 includes a processor 1110, a communications interface) 1120, a memory 1130, and a bus 1140. The processor 1110, the communication interface 1120, and the memory 1130 complete mutual communication by using the bus 1140.

The communications interface 1120 is configured to communicate with a network device, where the network device includes a virtual machine management center, a shared memory, and the like.

The processor 1110 is configured to execute a program. The processor 1110 may be a central processing unit CPU, or an application specific integrated circuit ASIC (Application Specific Integrated Circuit), or one or more integrated circuits configured to implement the embodiment of the present invention.

The memory 1130 is configured to store a file. The memory 1130 may include a high-speed RAM, and may further include a non-volatile memory such as at least one disk memory. The memory 1130 may also be a memory array. The memory 1130 may also be divided into blocks, and the blocks may be combined into a virtual volume according to a specified rule.

In a possible implementation manner, the foregoing program may be program code that includes a computer operation instruction. The program may be specifically used to:
receive media information sent by a contact;
extract a key characteristic of the media information;
search, according to a prestored correspondence between a key characteristic and a contact attribute, for whether a contact attribute corresponding to the key characteristic of the media information exists; and
group, if the contact attribute corresponding to the key characteristic of the media information exists, the contact into a group corresponding to the contact attribute.

In a possible implementation manner, the media information includes voice information.

In a possible implementation manner, the contact attribute includes at least one of: a gender, an age range, and an accent, and the extracting a key characteristic of the media information includes: converting the voice information into a voice signal, and extracting a frequency of the voice signal as the key characteristic of the media information.

In a possible implementation manner, the contact attribute includes at least one of: a hobby and a habit, and the extracting a key characteristic of the media information includes: extracting a keyword in the voice information as the key characteristic of the media information.

In a possible implementation manner, the media information includes text information, the contact attribute includes at least one of: a hobby and a habit, and the extracting a key characteristic of the media information includes: extracting a keyword in the text information as the key characteristic of the media information.

In a possible implementation manner, the media information includes image information, and the contact attribute includes at least one of: a hobby and a habit, and the extracting a key characteristic of the media information includes: extracting one or more of: a color characteristic, a texture characteristic, a shape characteristic, and a space relationship characteristic of the image information as the key characteristic of the media information.

In a possible implementation manner, before the searching for whether a contact attribute corresponding to the key characteristic of the media information exists, the program is further used to:
establish the correspondence between a key characteristic and a contact attribute.

In a possible implementation manner, the program is further used to:
create, if no contact attribute corresponding to the key characteristic of the media information is found, a correspondence between the key characteristic of the media information and the contact attribute.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the appended claims.

If the functions are implemented by computer software and are sold or used as independent products, it may be considered, to some extent, that all or part (such as the part that contributes to the prior art) of the technical solutions of the present invention is embodied by a computer software product. The computer software product is generally stored in a non-volatile computer readable storage medium and includes several instructions for instructing a computer device (which may be a personal computer, a server, or a network device, and the like) to perform all or a part of the steps of the methods described in the embodiments of the present invention. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementation manners of the present invention, but are not intended to limit the protection scope of the appended claims.

## Claims

1. A contact grouping computer implemented method for contacts in an address book, comprising:
establishing a correspondence between a key characteristic of media information and a contact attribute, wherein samples are trained to extract the key characteristic, construct a classifier, and establish at least one of: a gender mode library used to store a correspondence between a frequency of a voice signal and a gender and an age mode library used to store a correspondence between a frequency of a voice signal and an age;
receiving by a user terminal (S101) media information sent by a contact in an address book of the user terminal, wherein the media information comprises voice information;
extracting (SI02) a key characteristic of the media information, and wherein the extracting the key characteristic of the media information comprises: converting the voice information into a voice signal by means of Fourier transformation, and extracting a frequency of the voice signal as the key characteristic of the media information;
searching (SI03) at least one of the gender mode library or age mode library for a contact attribute corresponding to the extracted frequency of the voice signal, wherein the contact attribute comprises at least one of: a gender, and an age range; and
grouping (S104), when the contact attribute corresponding to the extracted frequency of the voice signal is found, the contact into a group corresponding to the contact attribute, wherein the group corresponding to the contact attribute is a group in the address book of the user terminal.

2. The contact grouping method according to claim 1, wherein the contact attribute comprises an accent.

3. The contact grouping method according to claim 1 or 2, wherein the contact attribute comprises at least one of: a hobby and a habit, and the extracting a key characteristic of the media information comprises: extracting a keyword in the voice information as the key characteristic of the media information.

4. The contact grouping method according to any one of claims 1 to 3, wherein the media information comprises text information, the contact attribute comprises at least one of: a hobby and a habit, and the extracting a key characteristic of the media information comprises: extracting a keyword in the text information as the key characteristic of the media information.

5. The contact grouping method according to any one of claims 1 to 4, wherein the media information comprises image information, and the contact attribute comprises at least one of: a hobby and a habit, and the extracting a key characteristic of the media information comprises: extracting one or more of: a color characteristic, a texture characteristic, a shape characteristic, and a space relationship characteristic of the image information as the key characteristic of the media information.

6. The contact grouping method according to any one of claims 1 to 5, further comprising:
creating, when no contact attribute corresponding to the key characteristic of the media information is found, a correspondence between the key characteristic of the media information and the contact attribute.

7. A contact grouping apparatus for contacts in an address book, comprising:
an establishing module (150), configured to establish a correspondence between a key characteristic of media information and a contact attribute, wherein samples are trained to extract the key characteristic, construct a classifier, and establish at least one of: a gender mode library used to store a correspondence between a frequency of a voice signal and a gender and an age mode library used to store a correspondence between a frequency of a voice signal and an age;
a receiving module (110), configured to receive media information sent by a contact in an address book of the apparatus, and wherein the media information comprises voice information;
an extracting module (120), connected to the receiving module and configured to extract a key characteristic of the media information, wherein extracting module comprises a converting unit (1201), configured to convert the voice information into a voice signal by means of Fourier transformation, and wherein the extracting module comprises a frequency extracting unit (1202), configured to extract a frequency of the voice signal as the key characteristic of the media information;
a searching module (130), connected to the extracting module and configured to search at least one of the gender mode library or age mode library for a contact attribute corresponding to the extracted frequency of the voice signal, wherein the contact attribute comprises at least one of: a gender, and an age range; and
a grouping module (140), connected to the searching module and configured to group, when the searching module finds that the contact attribute corresponding to the extracted frequency of the voice signal exists, the contact into a group corresponding to the contact attribute, wherein the group corresponding to the contact attribute is a group in the address book of the apparatus.

8. The contact grouping apparatus according to claim 7, wherein the contact attribute comprises an accent.

9. The contact grouping apparatus according to claim 7 or 8, wherein the contact attribute comprises at least one of: a hobby and a habit, and the extracting module is specifically configured to extract a keyword in the voice information as the key characteristic of the media information.

10. The contact grouping apparatus according to claim 9, wherein the media information received by the receiving module comprises text information, the contact attribute comprises at least one of: a hobby and a habit, and the extracting module is specifically configured to extract a keyword in the text information as the key characteristic of the media information.

11. The contact grouping apparatus according to claim 10, wherein the media information received by the receiving module comprises image information, the contact attribute comprises at least one of: a hobby and a habit, and the extracting module is specifically configured to extract one or more of: a color characteristic, a texture characteristic, a shape characteristic, and a space relationship characteristic of the image information as the key characteristic of the media information.

12. The contact grouping apparatus according to any one of claims 7 to 11, further comprising:
a creating module (160), connected to the searching module and configured to create, when the searching module finds no contact attribute corresponding to the key characteristic of the media information, a correspondence between the key characteristic of the media information and the contact attribute.

13. A computer program product, **characterised by**, comprising instructions which, when executed by a computer device, will cause the computer device to perform the steps any one of claims 1 to 6.

## Patentansprüche

1. Rechnerimplementiertes Verfahren zum Gruppieren von Kontakten in einem Adressbuch, umfassend:
Herstellen einer Entsprechung zwischen einem Schlüsselmerkmal von Medieninformationen und einem Kontaktattribut, wobei Muster trainiert werden, um das Schlüsselmerkmal zu extrahieren, einen Klassifizierer zu konstruieren und mindestens eine von einer Geschlechtsmodus-Bibliothek, verwendet zum Speichern einer Entsprechung zwischen einer Frequenz eines Sprachsignals und einem Geschlecht, und einer Altersmodus-Bibliothek, verwendet zum Speichern einer Entsprechung zwischen einer Frequenz eines Sprachsignals und einem Alter, zu erstellen;
Empfangen (S101) von durch einen Kontakt in einem Adressbuch des Benutzerendgeräts gesendeten Medieninformationen durch ein Benutzerendgerät, wobei die Medieninformationen Sprachinformationen umfassen;
Extrahieren (S102) eines Schlüsselmerkmals der Medieninformationen, und wobei das Extrahieren des Schlüsselmerkmals der Medieninformationen umfasst: Umwandeln der Sprachinformationen in ein Sprachsignal mittels Fourier-Transformation und Extrahieren einer Frequenz des Sprachsignals als das Schlüsselmerkmal der Medieninformationen;
Durchsuchen (S103) mindestens einer aus der Geschlechtsmodus-Bibliothek oder der Altersmodus-Bibliothek nach einem Kontaktattribut, das der extrahierten Frequenz des Sprachsignals entspricht, wobei das Kontaktattribut mindestens eines von einem Geschlecht und einem Altersbereich umfasst; und
Gruppieren (S104), wenn das Kontaktattribut, das der extrahierten Frequenz des Sprachsignals entspricht, gefunden worden ist, des Kontakts in eine dem Kontaktattribut entsprechende Gruppe, wobei die Gruppe, die dem Kontaktattribut entspricht, eine Gruppe in dem Adressbuch des Benutzerendgeräts ist.

2. Verfahren zum Gruppieren von Kontakten nach Anspruch 1, wobei das Kontaktattribut einen Akzent umfasst.

3. Verfahren zum Gruppieren von Kontakten nach Anspruch 1 oder 2, wobei das Kontaktattribut mindestens eines umfasst von einem Hobby und einer Gewohnheit und das Extrahieren eines Schlüsselmerkmals der Medieninformationen umfasst: Extrahieren eines Schlüsselworts in den Sprachinformationen als das Schlüsselmerkmal der Medieninformationen.

4. Verfahren zum Gruppieren von Kontakten nach einem der Ansprüche 1 bis 3, wobei die Medieninformationen Textinformationen umfassen, das Kontaktattribut mindestens eines von einem Hobby und einer Gewohnheit umfasst und das Extrahieren eines Schlüsselmerkmals der Medieninformationen umfasst: Extrahieren eines Schlüsselworts in den Textinformationen als das Schlüsselmerkmal der Medieninformationen.

5. Verfahren zum Gruppieren von Kontakten nach einem der Ansprüche 1 bis 4, wobei die Medieninformationen Bildinformationen umfassen und das Kontaktattribut mindestens eines von einem Hobby und einer Gewohnheit umfasst und das Extrahieren eines Schlüsselmerkmals der Medieninformationen umfasst: Extrahieren von einem oder mehreren aus einem Farbmerkmal, einem Texturmerkmal, einem Formmerkmal und einem räumlichen Beziehungsmerkmal der Bildinformationen als das Schlüsselmerkmal der Medieninformationen.

6. Verfahren zum Gruppieren von Kontakten nach einem der Ansprüche 1 bis 5, ferner umfassend:
Erzeugen, wenn kein dem Schlüsselmerkmal der Medieninformationen entsprechendes Kontaktattribut gefunden wird, einer Entsprechung zwischen dem Schlüsselmerkmal der Medieninformationen und dem Kontaktattribut.

7. Vorrichtung zum Gruppieren von Kontakten für Kontakte in einem Adressbuch, umfassend:
ein Erstellungsmodul (150), ausgelegt zum Erstellen einer Entsprechung zwischen einem Schlüsselmerkmal von Medieninformationen und einem Kontaktattribut, wobei Muster trainiert werden, um das Schlüsselmerkmal zu extrahieren, einen Klassifizierer zu konstruieren und mindestens eine von einer Geschlechtsmodus-Bibliothek, verwendet zum Speichern einer Entsprechung zwischen einer Frequenz eines Sprachsignals und einem Geschlecht, und einer Altersmodus-Bibliothek, verwendet zum Speichern einer Entsprechung zwischen einer Frequenz eines Sprachsignals und einem Alter, zu erstellen;
ein Empfangsmodul (110), ausgelegt zum Empfangen von durch einen Kontakt in einem Adressbuch der Vorrichtung gesendeten Medieninformationen, und wobei die Medieninformationen Sprachinformationen umfassen;
ein Extraktionsmodul (120), verbunden mit dem Empfangsmodul und ausgelegt zum Extrahieren eines Schlüsselmerkmals der Medieninformationen, wobei das Extraktionsmodul eine Umwandlungseinheit (1201) umfasst, ausgelegt zum Umwandeln der Sprachinformationen in ein Sprachsignal mittels Fourier-Transformation, und wobei das Extraktionsmodul eine Frequenzextraktionseinheit (1202) umfasst, ausgelegt zum Extrahieren einer Frequenz des Sprachsignals als das Schlüsselmerkmal der Medieninformationen;
ein Suchmodul (130), verbunden mit dem Extraktionsmodul und ausgelegt zum Durchsuchen mindestens einer aus der Geschlechtsmodus-Bibliothek oder der Altersmodus-Bibliothek nach einem Kontaktattribut, das der extrahierten Frequenz des Sprachsignals entspricht, wobei das Kontaktattribut mindestens eines von einem Geschlecht und einem Altersbereich umfasst; und
ein Gruppierungsmodul (140), verbunden mit dem Suchmodul und ausgelegt, wenn das Suchmodul herausfindet, dass das Kontaktattribut, das der extrahierten Frequenz des Sprachsignals entspricht, vorliegt, zum Gruppieren des Kontakts in eine dem Kontaktattribut entsprechende Gruppe, wobei die Gruppe, die dem Kontaktattribut entspricht, eine Gruppe in dem Adressbuch der Vorrichtung ist.

8. Vorrichtung zum Gruppieren von Kontakten nach Anspruch 7, wobei das Kontaktattribut einen Akzent umfasst.

9. Vorrichtung zum Gruppieren von Kontakten nach Anspruch 7 oder 8, wobei das Kontaktattribut mindestens eines von einem Hobby und einer Gewohnheit umfasst und das Extraktionsmodul im Einzelnen dafür ausgelegt ist, ein Schlüsselwort in der Sprachinformation als das Schlüsselmerkmal der Medieninformationen zu extrahieren.

10. Vorrichtung zum Gruppieren von Kontakten nach Anspruch 9, wobei die von dem Empfangsmodul empfangenen Medieninformationen Textinformationen umfassen, das Kontaktattribut mindestens eines von einem Hobby und einer Gewohnheit umfasst und das Extraktionsmodul im Einzelnen dafür ausgelegt ist, ein Schlüsselwort in der Textinformation als das Schlüsselmerkmal der Medieninformationen zu extrahieren.

11. Vorrichtung zum Gruppieren von Kontakten nach Anspruch 10, wobei die von dem Empfangsmodul empfangenen Medieninformationen Bildinformationen umfassen, das Kontaktattribut mindestens eines von einem Hobby und einer Gewohnheit umfasst und das Extraktionsmodul im Einzelnen dafür ausgelegt ist, eines oder mehrere von einem Farbmerkmal, einem Texturmerkmal, einem Formmerkmal und einem räumlichen Beziehungsmerkmal der Bildinformationen als das Schlüsselmerkmal der Medieninformationen zu extrahieren.

12. Vorrichtung zum Gruppieren von Kontakten nach einem der Ansprüche 7 bis 11, ferner umfassend:
ein Erzeugungsmodul (160), verbunden mit dem Suchmodul und ausgelegt, wenn das Suchmodul kein dem Schlüsselmerkmal der Medieninformationen entsprechendes Kontaktattribut findet, zum Erzeugen einer Entsprechung zwischen dem Schlüsselmerkmal der Medieninformationen und dem Kontaktattribut.

13. Rechnerprogrammprodukt, **gekennzeichnet dadurch, dass** es Anweisungen umfasst, die bei Ausführung durch eine Recheneinrichtung die Recheneinrichtung zum Durchführen der Schritte nach einem der Ansprüche 1 bis 6 veranlassen.

## Revendications

1. Procédé pour grouper des contacts mis en œuvre par ordinateur pour des contacts dans un carnet d'adresses, comprenant :
l'établissement d'une correspondance entre une caractéristique clé d'informations multimédias et un attribut de contact, des échantillons étant formés pour extraire la caractéristique clé, construire un classificateur, et établir au moins une bibliothèque parmi une bibliothèque de mode de genre utilisée pour stocker une correspondance entre une fréquence d'un signal vocal et un genre, et une bibliothèque de mode d'âge utilisée pour stocker une correspondance entre une fréquence d'un signal vocal et un âge ;
la réception par un terminal utilisateur (S101) d'informations multimédias envoyées par un contact dans un carnet d'adresses du terminal utilisateur, les informations multimédias comprenant des informations vocales ;
l'extraction (S102) d'une caractéristique clé des informations multimédias, et l'extraction de la caractéristique clé des informations multimédias comprenant : la conversion des informations vocales en un signal vocal au moyen d'une transformation de Fourier, et l'extraction d'une fréquence du signal vocal en tant que la caractéristique clé des informations multimédias ;
la recherche (S103) dans l'au moins une bibliothèque parmi une bibliothèque de mode de genre et une bibliothèque de mode d'âge d'un attribut de contact correspondant à la fréquence extraite du signal vocal, l'attribut de contact comprenant au moins l'un d'un genre, et d'une tranche d'âge ; et
le groupement (S104), lorsque l'attribut de contact correspondant à la fréquence extraite du signal vocal est trouvé, du contact dans un groupe correspondant à l'attribut de contact, le groupe correspondant à l'attribut de contact étant un groupe dans le carnet d'adresses du terminal utilisateur.

2. Procédé pour grouper des contacts selon la revendication 1, l'attribut de contact comprenant un accent.

3. Procédé pour grouper des contacts selon la revendication 1 ou 2, l'attribut de contact comprenant au moins l'un d'un passe-temps et d'une habitude, et l'extraction d'une caractéristique clé des informations multimédias comprenant : l'extraction d'un mot clé dans les informations vocales en tant que la caractéristique clé des informations multimédias .

4. Procédé pour grouper des contacts selon l'une quelconque des revendications 1 à 3, les informations multimédias comprenant des informations textuelles, l'attribut de contact comprenant au moins l'un d'un passe-temps et d'une habitude, et l'extraction d'une caractéristique clé des informations multimédias comprenant : l'extraction d'un mot clé dans les informations textuelles en tant que la caractéristique clé des informations multimédias.

5. Procédé pour grouper des contacts selon l'une quelconque des revendications 1 à 4, les informations multimédias comprenant des informations d'image, et l'attribut de contact comprenant au moins l'un d'un passe-temps et d'une habitude, et l'extraction d'une caractéristique clé des informations multimédias comprenant : l'extraction d'une ou plusieurs caractéristiques parmi une caractéristique de couleur, une caractéristique de texture, une caractéristique de forme et une caractéristique de relation spatiale des informations d'image en tant que la caractéristique clé des informations multimédias.

6. Procédé pour grouper des contacts selon l'une quelconque des revendications 1 à 5, comprenant en outre :
la création, lorsqu'aucun attribut de contact correspondant à la caractéristique clé des informations multimédias n'est trouvé, d'une correspondance entre la caractéristique clé des informations multimédias et l'attribut de contact.

7. Appareil pour grouper des contacts pour des contacts dans un carnet d'adresses, comprenant :
un module d'établissement (150), configuré pour établir une correspondance entre une caractéristique clé d'informations multimédias et un attribut de contact, des échantillons étant formés pour extraire la caractéristique clé, construire un classificateur, et établir au moins une bibliothèque parmi une bibliothèque de mode de genre utilisée pour stocker une correspondance entre une fréquence d'un signal vocal et un genre, et une bibliothèque de mode d'âge utilisée pour stocker une correspondance entre une fréquence d'un signal vocal et un âge ;
un module de réception (110), configuré pour recevoir des informations multimédias envoyées par un contact dans un carnet d'adresses de l'appareil, et les informations multimédias comprenant des informations vocales ;
un module d'extraction (120), connecté au module de réception et configuré pour extraire une caractéristique clé des informations multimédias, le module d'extraction comprenant une unité de conversion (1201), configurée pour convertir les informations vocales en un signal vocal au moyen d'une transformation de Fourier, et le module d'extraction comprenant une unité d'extraction de fréquence (1202), configurée pour extraire une fréquence du signal vocal en tant que la caractéristique clé des informations multimédias ;
un module de recherche (130), connecté au module d'extraction et configuré pour rechercher dans l'au moins une bibliothèque parmi une bibliothèque de mode de genre et une bibliothèque de mode d'âge un attribut de contact correspondant à la fréquence extraite du signal vocal, l'attribut de contact comprenant au moins l'un d'un genre et d'une tranche d'âge ; et
un module de groupement (140), connecté au module de recherche et configuré pour grouper, lorsque le module de recherche trouve que l'attribut de contact correspondant à la fréquence extraite du signal vocal existe, le contact dans un groupe correspondant à l'attribut de contact, le groupe correspondant à l'attribut de contact étant un groupe dans le carnet d'adresses de l'appareil.

8. Appareil pour grouper des contacts selon la revendication 7, l'attribut de contact comprenant un accent.

9. Appareil pour grouper des contacts selon la revendication 7 ou 8, l'attribut de contact comprenant au moins l'un d'un passe-temps et d'une habitude, et le module d'extraction étant configuré spécifiquement pour extraire un mot-clé dans les informations vocales en tant que la caractéristique clé des informations multimédias.

10. Appareil pour grouper des contacts selon la revendication 9, les informations multimédias reçues par le module de réception comprenant des informations textuelles, l'attribut de contact comprenant au moins l'un d'un passe-temps et d'une habitude, et le module d'extraction étant configuré spécifiquement pour extraire un mot-clé dans les informations textuelles en tant que la caractéristique clé des informations multimédias.

11. Appareil pour grouper des contacts selon la revendication 10, les informations multimédias reçues par le module de réception comprenant des informations d'image, l'attribut de contact comprenant au moins l'un d'un passe-temps et d'une habitude, et le module d'extraction étant spécifiquement configuré pour extraire une ou plusieurs caractéristiques parmi une caractéristique de couleur, une caractéristique de texture, une caractéristique de forme et une caractéristique de relation spatiale des informations d'image en tant que la caractéristique clé des informations multimédias.

12. Appareil pour grouper des contacts selon l'une quelconque des revendications 7 à 11, comprenant en outre :
un module de création (160), connecté au module de recherche et configuré pour créer, lorsque le module de recherche ne trouve aucun attribut de contact correspondant à la caractéristique clé des informations multimédias, une correspondance entre la caractéristique clé des informations multimédias et l'attribut de contact.

13. Produit de programme informatique, **caractérisé en ce qu'**il comprend des instructions qui, lorsqu'elles sont exécutées par un dispositif informatique, amèneront le dispositif informatique à réaliser les étapes selon l'une quelconque des revendications 1 à 6.
